# EUROPEAN PATENT APPLICATION

(11) **EP 1 054 329 A2**
(43) Date of publication of application: **22.11.2000**
(21) Application number: 00110718.4
(22) Date of filing: 19.05.2000
(51) Int. Cl.: G06F 17/27

(54) **Methods and apparatus for processing a document**

(30) Priority: 19.05.1999 DE 19922974
(71) Applicant: SUN MICROSYSTEMS, INC., Palo Alto, California 94303 (US)
(72) Inventor: Pingel, Jürgen, 21502 Geesthacht (DE)
(74) Representative: Betten & Resch

(57) **Abstract**

An autocomplete method speeds up and simplifies the production of documents using a computer system. After the user has input at least a predefined length input character string, the autocomplete method automatically provides a user with a display of one or more character strings that include the predefined length character string. The user can select one of the displayed character strings either to substitute for the predefined length character string, or to supplement the input character string. The autocomplete method automatically selects the one or more character strings that are displayed from a current document, from one or more other documents that the user specified in a document reservoir, or from both current document and one or more other documents in the document reservoir. There is no requirement for relating the displayed character strings with specific key combinations, with a particular field in a form, or with a particular piece of computer code.

## Description

### BACKGROUND OF THE INVENTION

### Field of the Invention

The invention relates generally to a method for automatically processing a document using a computer system, and in particular to methods for automatically filling in data in such a document.

### Description of Related Art

When documents are processed on a computer using a keyboard, less experienced users, especially, find difficulty in quickly inputting relatively long character strings - particularly with text containing specialist or foreign vocabulary. Inputting such character strings is particularly troublesome and susceptible to error if the character strings are repeated many times in the document. Hence, it has long been desirable to speed up or simplify the processing of documents.

It is already known practice to assign certain character strings to individual key combinations on the keyboard. The character string is inserted into the document when the key combination is used. It is also known practice to program larger text items beforehand into so-called macros, which are executed when key combinations are called up or when macro names are input, and which insert the relevant text item into the document. A disadvantage of both methods is the effort and the time taken for the user to define the key combinations or macros before they are used for the first time, and also the limitation on the reserve of available key combinations, and not least the need to know key combinations or macro names by heart, without which a time saving is lost again.

Programs for automatically checking spelling are also already known, these programs compare a document word by word for conformity with a dictionary and suggest to the user one or more similar words from the dictionary for replacing words, which do not conform in the document. However, these programs are of no help whatsoever in speeding up the creation and editing of texts, because there is nothing different about having to input each word in fu11 in the document. Furthermore, these programs encounter great difficulty particularly when they are used on a text, which contains a lot of vocabulary, which they do not yet "recognize". In this case, the vocabulary must be added ("taught") to the dictionary manually, which again involves additional work and time for the user.

It is also known practice, when there is a request for an input on user interfaces, to finish the incomplete input of an operating system command for permitted operating system commands if it can be finished unambiguously, namely by comparing the incomplete input with the reserve of permitted, i.e. permanently predefined, operating system commands. However, none of the above methods can be used to speed up the processing of specified documents without the user having to invest time beforehand in matching the method to his/her problem.

### SUMMARY OF THE INVENTION

According to the principle of this invention, as character strings are entered into a current document being processed on a device, e.g., a workstation, or a client device in a client server system, a method executing on a processor automatically saves character strings having a predetermined minimum length in a list stored in a memory. The list also may include character strings having the predetermined minimum length from a plurality of documents selected by a user. The method compares a predetermined minimum number of characters in a new character string input into an input buffer memory via an input unit with character strings in the list to generate another list of character strings. A portion of each character string in the another list matches the predetermined minimum number of characters in the new character string. The method displays the character strings in the another list on a display unit so that the user has an option of selecting one of the displayed character strings.

Upon selection of one of the displayed character strings by the user, the method supplements the new character string in the current document by the additional characters in the selected character string. However, if no match is found in the comparison operation, the method adds the new input string to the list upon the new input string being complete.

In one embodiment, the method also saves character strings, having a predetermined minimum length in a document selected by a user, in the list where the document selected by the user is different from the current document. The predetermined minimum length of the character strings in the list is at least six characters in one embodiment.

A system of this invention includes a processor and a memory having an autocomplete method stored therein. Upon execution of the autocomplete method on the processor, the autocomplete method comprises:
saving automatically character strings having a predetermined minimum length in a list stored in a memory as the character strings are entered into a current document being processed wherein the list includes character strings having the predetermined minimum length from a least one other document selected by the user;
comparing a predetermined minimum number of characters in a new character string input into an input buffer memory via an input unit with character strings in the list to generate another list of character strings where a portion of each character string in the another list matches the predetermined minimum number of characters in the new character string; and
sending at least one of the character strings in the another list to a display unit wherein upon the display unit displaying the at least one of the character strings in the another list, the user has an option of selecting one of the character strings in the another list.

In another embodiment of the invention, a computer memory includes an autocomplete method stored therein. Upon execution of the autocomplete method, the autocomplete method comprises:
saving automatically character strings having a predetermined minimum length in a list stored in a memory as the character strings are entered into a current document being processed wherein the list includes character strings having the predetermined minimum length from a least one other document selected by the user;
comparing a predetermined minimum number of characters in a new character string input into an input buffer memory via an input unit with character strings in the list to generate another list of character strings where a portion of each character string in the another list matches the predetermined minimum number of characters in the new character string; and
sending at least one of the character strings in the another list to a display unit wherein upon the display unit displaying the at least one of the character strings in the another list, the user has an option of selecting one of the character strings in the another list.

In yet another embodiment, a computer system of this invention includes:
means for saving automatically character strings having a predetermined minimum length in a list stored in a computer system memory as the character strings are entered into a current document being processed on the computer system wherein the list includes character strings having the predetermined minimum length from a least one other document selected by the user;
means for comparing a predetermined minimum number of characters in a new character string input into a computer system input buffer memory via an input unit of the computer system with character strings in the list to generate another list of character strings where a portion of each character string in the another list matches the predetermined minimum number of characters in the new character string; and
means for sending the at least one of the character strings in the another list to a display unit wherein upon the display unit displaying the at least one of the character strings in the another list, the user has an option of selecting one of the character strings in the another list.

Hence, the invention in one of its embodiments provides a method for processing a document using a computer system having an input unit, a buffer memory and a screen, the document being produced as a result of character strings of different length being input into the buffer memory via the input unit, with the document being able to be displayed on the screen, and the method having at least the following operations which are carried out automatically in the computer system:
A) The document is searched for character strings having a predetermined minimum length. An existing document which is being processed further is searched after opening, and a document which is just being gradually newly created is searched as it is being produced, see operation E) below. In addition to the document to be processed, a number of other documents can also be searched, for example, the documents, which have just been opened, or such documents as belong to a particular category of documents, for example technical documents. In this case, the number is arbitrary, i.e., from zero to almost infinity, depending on the desired completeness of the list.
B) A list is created of the character strings found in the document, which have the predetermined minimum length. The character string in the list can be selected preferably after the frequency of the character strings found in the document has been determined. Alternatively, a selection can be made on the basis of other criteria, which are explained in more detail later on. In such cases, character strings with a certain specification, for example insufficient frequency, are deleted from the list again. The decision, as to which character strings are to remain in the list, particularly whether all or only some of the character strings should remain, ultimately depends on a balance between completeness and speed of the desired AutoComplete system. This list can be stored permanently or temporarily.
C) The following operations are carried out every time a predetermined minimum number of characters in a new character string has been input into the buffer memory via the input unit:
   i) The list is searched for character strings beginning with the characters, which have been input, i.e. the minimum number of characters in the newly input character string.
   ii) The character strings found are displayed on the screen. In this case, the character strings can all be displayed on the screen at the same time, in an order based on suitable criteria, or the character string which is first according to chance, chronology or frequency can be displayed first, the other character strings being displayed successively or at the same time only if the first character string has not been accepted.
   iii) The user is given the option of selecting one of the displayed character strings. This selection can be made using any means available in a computer system, as described in more detail later on.
D) The characters which have been input in the new character string in the document are supplemented by additional characters in the selected character string if the user has chosen one of the selection options in accordance with section C) iii). By supplementing the character string, for example, the upper and lower cases in the character string, which has been started, are retained. If this is unnecessary or even undesirable, the characters in the new character string, which have already been input, can also be replaced by the selected character string.
E) The new character string is added to the stored list if the character string which has been input is not yet included in the list. This means that the list is constantly updated, as already indicated above in operation B).

### BRIEF DESCRIPTION OF THE DRAWINGS

Figure 1A is a high-level block diagram of a computer system that includes the autocomplete method of this invention.
Figure 1B is a high-level block diagram where the computer system of Figure 1A is distributed among a plurality of devices that are interconnected via a network.
Figure 1C is a high-level block diagram where the computer system of Figure 1A is distributed among a plurality of devices, and the autocomplete method of this invention is transferred from a memory in a first device to a memory in a second device.
Figure 2 is a process flow diagram of one embodiment of the autocomplete method of this invention.

Herein, elements with the same reference numeral are the same element.

### DETAILED DESCRIPTION

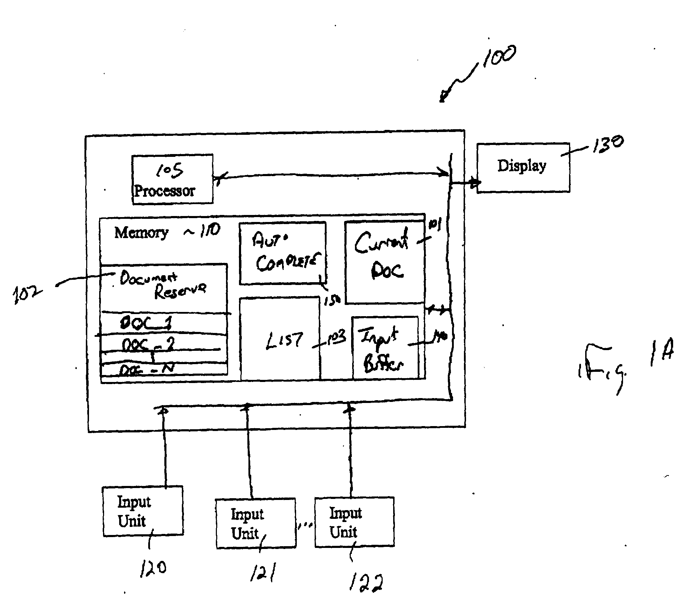

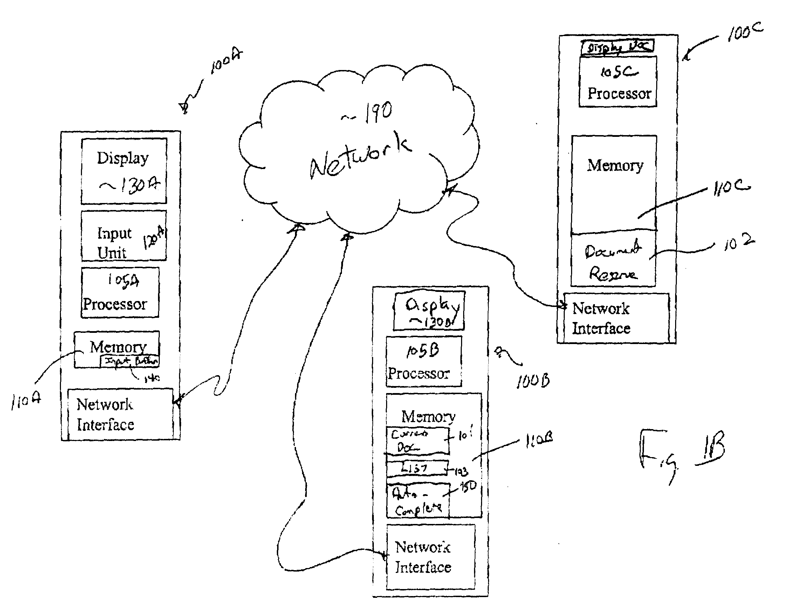

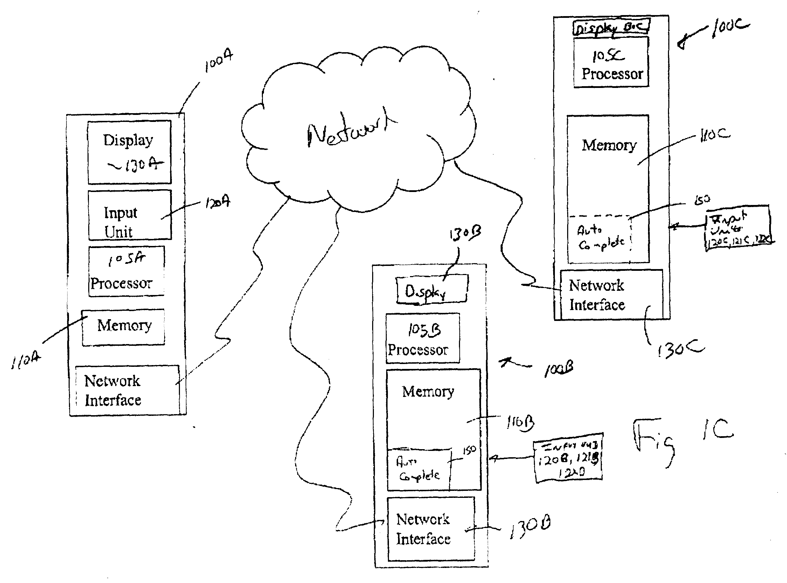

According to an embodiment of this invention, an autocomplete method 150 (Fig. 1) speeds up and simplifies the production of documents using a computer system 100. In particular, after the user has input at least a predefined length input character string, autocomplete method 150 of this invention automatically provides a user with a display of one or more character strings that include the predefined length character string. The user can select one of the displayed character strings either to substitute for the predefined length character string, or to supplement the input character string. Herein, when method 150 is said to accomplish or cause an act, those of skill in the art will understand that this refers to executing method 150 on a processor, which in turn causes the processor to issue signals that result in the stated act.

Unlike the prior art, autocomplete method 150 of an embodiment of this invention automatically selects one or more character strings, which are sent for display on display unit 130, from a list 103 generated using a current document 101, using one or more other documents DOC_1 to DOC_N in a document reservoir 102 that the user specified, or using both current document 101 and one or more other documents in document reservoir 102. There is no requirement for relating the displayed character strings with specific key combinations, with a particular field in a form, or with a particular piece of computer code, such as a prior art macro.

Autocomplete method 150 of an embodiment of this invention is particularly advantageous in preparing documents that include longer character strings that are repeated within current document 101 or are found in an assortment of other documents DOC_1 to DOC_N in document reservoir 102. Since autocomplete method 150 executes as current document 101 is being generated, there is no need to manually build a separate database, either in a dictionary or other text substitution feature as in the prior art described above. Thus, the user can generate an accurate document more rapidly and more easily than was previously possible.

Figure 1A is a high-level block diagram of one embodiment of a computer system 100 that has autocomplete method 150 stored in a memory 110, which can include volatile memory, non-volatile memory, or a combination of the two. For example, non-volatile memory can include, but is not limited to, any one or more of a hard disk drive, a floppy disk, magnetic tape, CD-ROM, or any other suitable memory that one programmed retains the programmed information. As used herein, programmed means storing information in the memory. Further, those of skill in the art will appreciate that while memory 110 is illustrated as one unit, in most computer systems, memory 110 is implemented as a plurality of memory units. In more general terms, autocomplete method 150 is stored in a computer readable medium, and when autocomplete method 150 is loaded from the computer readable medium into a memory of a device, the device is configured to be a special purpose machine that executes autocomplete method 150.

Autocomplete method 150 executes on processor 105. Computer system 100 includes at least one input unit, and may include a plurality of input units 120 to 122, which may be, for example, a keyboard, a microphone coupled to a voice recognition system, or a mouse. Computer system 100 also includes a display unit 130.

An application is executing on processor 105, and current document 101 is displayed on display unit 130. Autocomplete method 150 may be started at any time by the application. The particular type of application that utilizes autocomplete method 150 is not essential to this invention. Autocomplete method 150 enhances the operation of any application that utilizes character strings, for example, a word processing application.

As the user enters character strings into current document 101, method 150 automatically saves character strings having a predetermined minimum length in a list 103 in computer system memory 110. When the user has input at least a predetermined minimum number of characters in a new character string into a computer system input buffer memory 140 via one of input units 120 to 122, method 150 compares the new character string in input buffer 140 with character strings in list 103 to generate another list of character strings where a portion of each character string in the another list matches the new character string.

Method 150 sends the character strings in the another list to a display unit 130 for display, and the user has an option of selecting one of the displayed character strings. Of course, the character strings in the another list can be displayed one at a time, in groups, or all at once. The number of character strings displayed simultaneously can be determined by a user filter function, the display size, parameters preset in method 150 or any combination of these choices. For example, the number displayed could be preset in method 150, and the user could have the option of specifying the display size or the number displayed at one time, which in turn would change the number of character strings displayed from the preset number if necessary. In one embodiment, upon selection of one of the displayed character strings by the user, method 150 supplements the new character string in current document 101 by the additional characters in the selected character string.

If method 150 fails to find a match, and the input character string has at least the predetermined minimum length, the input character string is added to list 103. In addition, to adding character strings in current document 101 to list 103, method 150 saves character strings having the predetermined minimum length in a document DOC_N selected by a user in list 103.

Allowing the user to select a document reservoir 102 that is used to generate list 103 has several advantages. For example, after inputting the characters "Hys", method 150 according to the invention suggests to him/her the character string "Hysteresis", for example, if this character string was found when list was 103 created using the documents in document reservoir 102. On the other hand, if a document has a psychological context, for example, the user instead want to input the character string "Hysteria" if he/she starts with the characters "Hys". If list 103 was created using documents with the corresponding context, this character string is suggested to the user. In these examples, the character strings each represent linguistic expressions. Note that documents in document reservoir 102 are opened only to generate list 103, and then are closed, in this embodiment.

Method 150 can display the character strings selected from list 103 in a variety of ways. The displayed character strings can appear in the order of the sequence in which the character strings were last selected by the user. Alternatively, the displayed character strings appear in an order based on the frequency with which the character strings are selected.

In one embodiment, the predetermined minimum length of the character strings in the list is at least six characters. The predetermined minimum number of characters in a new character string is in one embodiment at least three characters, but can range from one character up to a maximum number of characters that is either set by method 150 or selected by the user.

Hence, with computer-based method 150, only the start of a character string needs to be input by the user to have a complete character string automatically suggested to the user for selection. The selection is made from a list 103, which is created automatically as a result of a search through the document that is just being created or processed, or a search through particular documents, preferably documents involving a similar subject to that of the document which is to be processed. If documents other than the current document are used to generate list 103, these documents are opened for use in creating list 103 and then are closed.

List 103 can be stored permanently, but is preferably not stored statically, instead, list 103 is newly created for a document 101 from this document itself or from certain similar documents DOC_1 to DOC_N (which can be opened by the user) at the start of every processing session for document 101. Therefore, the list of character strings automatically adapts to the respective document being processed, without any further intervention by the user. The character strings held and used for comparison with the input character strings are thus always as up to date as possible. This not only increases the "hit rate", but also the access time to list 103 is also reduced. Since additionally list 103 is constantly supplemented by the words input into document 101, this is a self-teaching, i.e. dynamic, method of document processing.

Computer system 100, in one embodiment, can be a portable computer, a workstation, a two-way pager, a cellular telephone, a digital wireless telephone, a personal digital assistant (PDA), or any other device that includes the components shown and that can execute method 150. Similarly, in another embodiment, computer system 100 can be comprised of multiple different computers, wireless devices, cellular telephones, digital telephones, two-way pagers, or personal digital assistants or any desired combination of these devices that are interconnected to perform autocomplete method 150 as described herein. See for example, Figure 1B. Accordingly, a computer memory refers to a volatile memory, a non-volatile memory, or a combination of the two in any one of these devices. Similarly, a computer input unit and a display unit refers to the features providing the required functionality to input the information described herein, and to display the information described herein, respectively, in any one of the aforementioned or equivalent devices.

In addition, memory 110 may be physically located in a location different from processor 105. The only requirement is that processor 105 is coupled to memory 110. This could be accomplished in a client-server system, or alternatively via a connection to another computer via modems and analog lines, or digital interfaces and a digital carrier line. For example, memory 110 could be in a World Wide Web portal, while display unit 130 and processor 105 are in a personal digital assistant, or a wireless telephone. Conversely, display unit 130 and input devices 120 to 122 could be in a client computer, a wireless telephone, or a PDA, while memory 110 and processor 105 are part of a server computer on a wide area network, a local area network, or the Internet.

In view of this disclosure, method 150 can be implemented in a wide variety of computer system configurations. In addition, method 150 could be stored as different modules in memories of different devices. For example, method 150 could initially be stored in a server computer, and then as necessary, a module of method 150 could be transferred to a client device and executed on the client device. Consequently, part of method 150 would be executed on the server processor, and another part of method 150 would be executed on the client device processor. In view of this disclosure, those of skill in the art can implement the invention of a wide-variety of physical hardware configurations using an operating system and computer programming language of interest to the user.

Moreover, while in Figure 1A, document reservoir 102 is shown as part of the same memory 110 as the memory storing autocomplete method 150, those of skill in the art will understand that this is illustrative only. Document reservoir 102, in one embodiment, is in a first memory 110C (Fig. 1B) that is coupled to a second memory 110B containing autocomplete method 150 via a network connection. For example, document reservoir 102 is on a memory of computer 100C, which could be, for example, a file server, while autocomplete method 150 and processor 105 are located in another computer 100B, which could be, for example, a workstation. Computers 100B and 100C are coupled via network 190. Alternatively, document reservoir 102 is in a first memory 110C in first system 100C, autocomplete method 150 is in another memory 110B in a second system 100B, and processor 105 can be in either first system 100C, second system 100B, or a third system 100A that is different from the first and second systems. The particular configuration of memory 110 used to support autocomplete method 150 is not essential to this invention.

In yet another embodiment illustrated in Figure 1C, autocomplete method 150 is stored in memory 110 of system 100B. Autocomplete method 150 is transferred, over network 190 to memory 110C in system 100C. In this embodiment, network interface 160B and 160C can be analog modems, digital modems, or a network interface card. If modems are used, network 190 includes a communications network, and autocomplete method 150 is said to be downloaded.

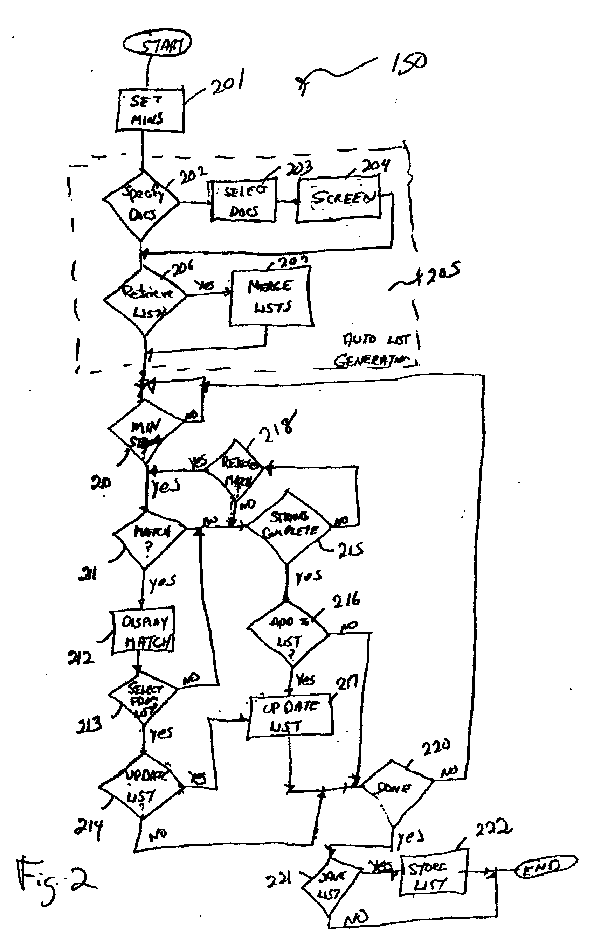

Upon initiation, autocomplete method 150 enters set minimums operation 201 (Fig. 2). In this embodiment, a user interface is presented on display unit 130 that asks the user to specify (i) a minimum length for the character strings in list 103, and (ii) a minimum length for an input character string that is used as a key to the list of character strings. As indicated below, this user configuration can be optional.

In one embodiment, the user is limited to selecting a minimum length for the character strings in list 103 of six characters or greater. The minimum length for the input character string is typically selected by the user, with three being a preferred default number of characters. While in this embodiment, the minimums are obtained through user input, in other embodiments, the minimums are simply initialized by method 150 without any user interaction. Set minimums operation 201 transfers processing to specify documents check operation 202.

In specify documents check operation 202, another user interface asks the user whether the user wants to select documents for use by method 150. If the user indicates yes, operation 202 transfers to select documents operation 203, and otherwise to retrieve list check operation 206. Check 202 also is optional and so if operation 202 is not used operation 203 and 204 would not be needed. If check 202 is not used, processing would transfer directly from operation 201 to check operation 206, or alternatively directly to check operation 210.

In select documents operation 203, the user can select documents before beginning to process a new document, or alternatively at any time while processing the new document. In particular, the user can define a document reservoir 102. If for example, the user wants to process a document relating to a physical subject, then he/she selects one or more previously created documents (if available) on this physical subject in operation 203. Of course, the selected document or documents remain unchanged in the background as long as the selected document or documents are not activated by the user for processing. The number of documents selected by the user can vary from zero to any desired number. Of course, the larger the number selected, the larger the processing requirements for method 150.

Also, the documents selected by the user do not have to be located on system 100. For example, if system 100 is connected to a network, the documents can be retrieved, or alternatively accessed over the network. (See Figure 1B.) Thus, while network reserve 102 is shown as included within a memory 110 of system 100, this is illustrative only and is not intended to limit the invention. The only requirement is that autocomplete method 150 be able to access the document reserve and be able to perform the processing described below over the network connection. After selection of the documents is completed, operation 203 transfers to screen operation 204.

In screen operation 204, the selected documents are opened and scanned. All character strings in the selected documents having a length equal to or greater than the minimum length for the character strings are stored in a list 103. In this embodiment, the only filter used for inclusion in list 103 is that the character string in the selected document be equal or greater than the minimum.

In another embodiment, the frequency of occurrence is used as an additional filter so that character strings in the list must occur in the selected documents at least a predefined number of times, i.e., must have at least a minimum predefined frequency of occurrence, and must have a length greater than or equal to the minimum length. In this embodiment, the entries in the list are arranged by frequency of occurrence with the character strings having the greatest frequency of occurrence at one end of the list, and the character strings having the minimum predefined frequency of occurrence at the other end of the list.

In general, any filtering criteria of interest to users may be implemented to select character strings for list 103. The trade-offs are better completeness of list 103, and the speed performance desired from autocomplete method 150. Methods for extracting character strings from a document are known to those of skill in the art, as are methods for filtering the character strings based upon specified criteria and organizing the filtered data in a list. The particular methods used are not essential to this invention. Upon completion of screen operation 204, the documents used to generate list 103 are closed, and processing transfers to retrieve list check operation 206.

Retrieve list check operation 206 asks the user whether the user has previously saved a list, and whether the user wishes to retrieve the saved list. If the user wishes to utilize a saved list processing transfers to merge lists operation 207 and otherwise to minimum string in buffer check operation 210. Check operation 206 also is optional. In general, if the operations associated with a branch from a check operation in method 150 are unwanted, the check can be programmed to always default to a particular value, or alternatively, the check and the unwanted operations can be removed from the method. Consequently, multiple alternative embodiments can be obtained from Figure 2. To avoid unnecessary repetition, the various alternative embodiments that can be obtained by not utilizing branches extending from a check operation are not expressly called out hereafter, but these embodiments can be implemented the those skill in the art in view of this disclosure.

In merge lists operation 207, a check is made to determine whether the user generated a list using operation 204, e.g., is there a valid list 103. If there is a valid list 103, the stored list is retrieved and merged with valid list 103 to form a new list. If there is a filter associated with valid list 103, i.e., a filter was used in generating valid list 103, the filter is applied to the merged list. The merged list is stored in memory 110 as list 103.

If there is not a valid list 103 in memory 110, the stored list is retrieved and loaded in memory 110 as list 103. For example, if a user requires several sessions to create a document, the user does not have to perform the document selection at the start of each session and can simply recall stored list 103 and continue where the user left off in the last session. Merge lists operation 207 transfers processing to minimum string in buffer check operation 210.

In minimum string in buffer check operation 210, a check is made each time a character is added to input memory buffer 104 in response to one of the input devices 120 to 122. If the number of characters in input buffer 104 is equal to or greater than the minimum length for the input character string processing transfers to match check operation 211 and otherwise minimum string in buffer check operation 210 is repeated.

When the user has entered a new character string that is equal to the minimum length for the input character string, match check operation 211 determines whether the character string in input buffer 140 matches the same number of initial characters in any character string in list 103. If there is a match with one or more character strings in list 103, processing transfers to display match operation 212 and otherwise to string complete check operation 215.

In display match operation 212, the one or more matching character strings are sent to display unit 130 for display, and the user is given the option of selecting one of the displayed character strings. Operation 212 transfers processing to select from list check operation 213.

In select from list check operation 213, a selection can be made from the displayed character strings by using any one of input devices 120 to 122. The particular input device used to make the selection is not essential to this invention.

If the user selects one of the character displayed strings, the character string in input buffer 140, and consequently in document 101, is supplemented by any additional characters in the selected character string. By supplementing the character string, the upper and lower case characteristics of the character string in input buffer 140 are preserved. If this is unnecessary or undesirable, the character string in input buffer 140 is replaced by the selected character string. If the user selects one of the displayed character strings, check operation 213 transfers to update list check operation 214 and otherwise to string complete check operation 215.

Update list check operation 214 determines whether any filtering criteria are in use with list 103. If no filtering criteria are in use, it is unnecessary to consider updating list 103, and so update list check operation 214 transfers processing to done check operation 220. However, if filtering criteria are in use, update list check operation 214 transfers processing to update list operation 217.

In update list operation 217, list 103 is updated according to the filter criterion. For example, if the order of the list is frequency based, the frequency for the latest match is increased and the character strings in list 103 repositioned as necessary. Also, if the character strings more recently used are kept at the top of list 103, update list operation 217 positions the latest match at the appropriate position in list 103. Update list operation 217 transfers processing to done check operation 220.

If a match was detected in operation 211, but the user did not select a character string from the displayed list, check operation transferred to string complete check operation 215. This can occur for two reasons. A first reason is that the desired character string is not in the displayed list of character strings. A second reason is that the displayed list of character strings is too long and the user declined to scan through the list to find the character string because too many were displayed. In either of these cases, if the character string in input buffer 140 is complete, no further processing is required for this input character string and processing transfers to add to list check operation 216. However, if the character string in input buffer 140 is incomplete, check operation 215 transfers to rejected match check operation 218.

If operation 211 found a match, and rejected match check operation 218 is reached, it means that the user did not select a character string from the list. Consequently, check operation 218 transfers processing to match check operation 211. Otherwise, check operation 218 transfers to string complete operation 215. If there was no match, processing remains in string complete operation 215 until a complete character string is input buffer 140 and then processing continues, as indicated above, by transferring to check operation 216.

When operation 218 transfers to match check operation 211, match check operation 211 waits until another character is entered in input buffer 140 and then checks the longer input character string for a match with character strings in list 103. Alternatively, the list displayed for the previous match could be saved and then used in this iteration of match check operation 211. In either embodiment, if a match is found, processing transfers to display match 212 and otherwise to string complete operation 215.

The larger number of character in the input character string should limit the number of character strings displayed in display match operation 212. Operations 213, 215, 218, 211, are repeated until either the user selects a character string from a displayed list, there is not a match, or the input character string is complete. The operations performed, when the user selects a character string from the list, were described above.

When string complete check operation 215 transfers to add to list check operation 216, the character string in input buffer 140 is check to determined whether the character string is the minimum length for the character strings in list 103. If the input character string is not the minimum length processing transfers to done check operation 220 and otherwise to update list operation 217.

The operation performed by update list operation 217 upon this entry depends on the filtering criterion used. The adaptive nature of method 150 according to the invention can be increased further by the operations performed in update list operation 217.

As indicated above, operation 217 can arrange the character strings in list 103 so that the character strings appear in the order of the sequence in which the character strings were last selected during processing of document 101. In addition or as an alternative to this, however, the character strings found can also be stored in an order based on the frequency with which the character strings found are selected. A multiplicity of appropriate and helpful selection or arrangement algorithms is conceivable in this case. For example, a character string which was previously frequent and whose status was reduced because the character string was not used for a relatively long time could be restored to the old status when called up again, the assumption being that, after a period of relatively little use, this previously frequent word will now occur more frequently.

It is also advantageous if character strings in list 103, which have not been selected within predetermined time periods, are removed from list 103 at predetermined time intervals. This prevents, firstly, the list search time from being long, and, secondly, the number of character strings to be displayed from being large. While in this embodiment, these operations are described as being in update list operation 217, the operations could also be performed on the match list that is displayed in display operation 212. Upon completion of update list operation 220, processing transfers to done check operation 220.

Done check operation 220 is included here only for completeness. Those of skill in the art will understand that normally processing transfers from update list to check operation 210 which starts again when a new input character string is being input to input buffer 140. Done check operation 220 is true when the user closes the current document 101. In which case, save list check operation 221 asks the user whether to save list 103.

If the user selects to save list 103, list 103 is moved to a non-volatile memory as necessary and method 150 terminates for document 101. Similarly, if the user does not select to save list 103, method 150 terminates for document 101.

In one embodiment, character strings in lists 103 can be or can include character strings that each refer to a macro that upon selection is executed in each case to produce a plurality of character strings. In this case, if the selected character string refers to a macro, the character string, which has been input, is deleted and the macro to which the selected character string refers is executed. This enables the method according to the invention to be applied to the use of macros. Accordingly, for example, whole text items can be inserted into a text at the click of a mouse or using other suitable selection methods.

The method is particularly advantageous for creating textual documents, where the character strings then represent linguistic expressions. The invention is not restricted to the application in word processing. Instead, it can be used advantageously for processing or editing all kinds of documents, involving character strings being input, for example from a character set such as the ASCII code.

## Claims

1. A method comprising:
saving automatically character strings having a predetermined minimum length in a list stored in a memory as the character strings are entered into a current document being processed; and
comparing a predetermined minimum number of characters in a new character string input into an input buffer memory via an input unit with character strings in the list to generate another list of character strings where a portion of each character string in the another list matches the predetermined minimum number of characters in the new character string, and wherein at least one of the character strings in said another list of character strings is for display on a display unit.

2. The method of Claim 1 further comprising:
sending said at least one of the character strings in the another list to a display unit wherein upon said display unit displaying said at least one of the character strings in the another list, the user has an option of selecting one of the character strings in said another list.

3. The method of Claim 1 wherein upon selection of one of the displayed character strings by the user, the method further comprises:
supplementing the new character string in the current document by the additional characters in the selected character string

4. The method Claim 3 further comprising:
adding the new input string to the list upon the new input string being complete and no match is found in the comparing.

5. The method of Claim 1 further comprising:
saving character strings having a predetermined minimum length in a document selected by a user in the list wherein the document selected by the user is different from the current document.

6. The method of Claim 5 wherein the document selected by the user is one document in a plurality of documents selected by the user and character strings having the predetermined minimum length in any of the plurality of documents are saved in the list.

7. The method of Claim 1 wherein the character strings each represent linguistic expressions.

8. The method of Claim 2 wherein the displayed character strings appear in the order of the sequence in which the character strings were last selected by the user.

9. The method of Claim 2 wherein the displayed character strings appear in an order based on the frequency with which the character strings are selected.

10. The method of Claim 1 wherein the predetermined minimum length of the character strings in the list is at least six characters.

11. The method of Claim 1 wherein the predetermined minimum number of characters in a new character string is a range of three to six characters.

12. The method of Claim 11 wherein the predetermined minimum number of characters in a new character string is three characters.

13. The method of Claim 2 wherein said display unit is a display unit of a first device, and said memory is in a second device different from said first device.

14. The method of Claim 2 wherein said display unit is a display unit of a first device, and said memory is in said first device.

15. A system comprising:
a processor; and
a memory having an autocomplete method stored therein, wherein upon execution of the autocomplete method, the autocomplete method comprises:
saving automatically character strings having a predetermined minimum length in a list stored in a system memory as the character strings are entered into a current document being processed on the system;
comparing a predetermined minimum number of characters in a new character string input into a system input buffer memory via an input unit of the system with character strings in the list to generate another list of character strings where a portion of each character string in the another list matches the predetermined minimum number of characters in the new character string; and
sending at least one of the character strings in the another list to a display unit wherein upon said display unit displaying said at least one of the character strings in the another list, the user has an option of selecting one of the character strings in said another list.

16. The system of Claim 15 wherein said system is a client-server system.

17. The system of Claim 15 wherein said processor and said memory are in a first device, and said display and input unit are for a second device different from said first device.

18. A memory having an autocomplete method stored therein, wherein upon execution of the autocomplete method, the autocomplete method comprises:
saving automatically character strings having a predetermined minimum length in a list as the character strings are entered into a current document being processed on the computer system; and
comparing a predetermined minimum number of characters in a new character string input into an input buffer memory via an input unit with character strings in the list to generate another list of character strings where a portion of each character string in the another list matches the predetermined minimum number of characters in the new character string wherein said another list of character strings is for display on a display unit.

19. The memory of Claim 18 wherein said autocomplete method is transferred from said memory to another memory.

20. The memory of Claim 19 wherein said transfer comprises a download over a communications network.

21. A computer system comprising:
means for saving automatically character strings having a predetermined minimum length in a list stored in a computer system memory as the character strings are entered into a current document being processed on the computer system;
means for comparing a predetermined minimum number of characters in a new character string input into a computer system input buffer memory via an input unit of the computer system with character strings in the list to generate another list of character strings where a portion of each character string in the another list matches the predetermined minimum number of characters in the new character string; and
means for sending at least one of the character strings in the another list to a display unit wherein upon said display unit displaying said at least one of the character strings in the another list, the user has an option of selecting one of the character strings in said another list..

22. The computer system of Claim 21 further comprising:
means for adding the new input string to the list upon the new input string being complete and no match is found in the means for comparing.

23. The computer system of Claim 21 further comprising:
means for saving character strings having a predetermined minimum length in a document selected by a user in the list wherein the document selected by the user is different from the current document.

24. The system of Claim 21 wherein said system is a client-server system.

25. The system of Claim 21 wherein said memory is in a first device, and said display and input unit are for a second device different from said first device.

26. A method for processing a document using a computer system having an input unit, a buffer memory and a screen, the document being produced as a result of character strings of different length being input into the buffer memory via the input unit, with the document being able to be displayed on the screen, and the method comprising at least the following steps which are carried out in the computer system;
A) the document is searched for character strings having a predetermined minimum length,
B) a list is created of the character strings found in the document which have the predetermined minimum length,
C) the following steps are carried out every time a predetermined minimum number of characters in a new character string has been input into the buffer memory via the input unit:
a) the list is searched for character strings beginning with the characters which have been input,
b) the character strings found are displayed on the screen,
c) the user is given the option of selecting one of the displayed character strings,
D) the characters which have been input in the new character string in the document are supplemented by the additional characters in the selected character string if the user has chosen one of the selection options,
E) the new character string is added to the stored list if the character string which has been input is not yet included in the list.

27. The method according to Claim 26, characterized in that a number of further documents is searched in step A).

28. The method according to one of claims 26 or 27, characterized in that
- before step C), substep b), the method additionally has the following substep: a reserve of character strings each referring to a macro is searched, a macro being executable in each case to produce a plurality of character strings, and
- in step D), the character string which has been input is deleted and the macro to which the selected character string refers is executed.

29. The method according to one of claims 26 to 28, characterized in that the documents to be searched in step A) can be selected by the user at any time, and/or
in that the character strings each represent linguistic expressions.

30. The method according to one of Claims 26 to 29, characterized in that the character strings found are displayed in step C) b) such that they appear in the order of the sequence in which they were last selected, and/or
in that the character strings found are displayed in step C) b) such that they appear in an order based on the frequency with which the character strings found are selected.

31. The method according to one of claims 26 to 30, characterized in that the selection is made using cursor keys on the keyboard or using a mouse of the computer system.

32. The method according to one of claims 26 to 31, characterized in that character strings which have not been selected within predetermined time periods are removed from the list at predetermined time intervals.

33. The method according to one of claims 26 to 32, characterized in that the predetermined minimum length of the character strings in step A) is at least six characters, and/or
in that the predetermined minimum number of characters in step C) which has been input is three.

34. The method according to one of claims 26 to 33, characterized in that the documents can each be stored permanently in the form of files.

35. The method according to one of claims 26 to 34, characterized in that the character strings are input using a keyboard and/or a mouse and/or a voice recognition system of the computer system.

36. A storage medium having a program code for carrying out the method according to one of claims 26 to 35.

37. An apparatus for carrying out the method according to one of claims 26 to 35.
